# EUROPEAN PATENT APPLICATION

(11) **EP 0 562 651 A1**
(43) Date of publication of application: **29.09.1993**
(21) Application number: 93200575.4
(22) Date of filing: 02.03.1993
(51) Int. Cl.: C04B 28/14, C04B 20/10, C04B 38/02

(54) **Mortar**

(30) Priority: 26.03.1992 DE 4209897
(71) Applicant: Nobel Paint and Adhesives AB, S-100 61 Stockholm (SE); Seifert, Gerhard, D-45721 Haltern (DE)
(72) Inventor: Schliffke, Horst-Friedrich, W-4430 Burgsteinfurt (DE); Ebert, Richard, W-4795 Delbrück (DE); Hermann, Günther, W-4428 Rosendahl 2 (DE); Seifert, Gerhard, W-4358 Haltern (DE)
(74) Representative: Jönsson, Christer

(57) **Abstract**

The invention concerns a composition comprising a calcium sulphate component as a binder and a carbonate as a foamable material. The composition further comprises a pre-hydrophobised water soluble hexafluorosilicate. The invention also relates to a method of producing foam mortar and a method of backfilling cavities with faom mortar.

## Description

The invention relates to a composition for producing foam mortar containing calcium sulphate and a carbonate. It also relates to a method of producing foam mortar and a method of backfilling cavities, particularly in mining and tunnelling.

The invention intends to solve the problem of providing a building material mixture suitable for the following applications.
a) In horizontal underground driving, large cavities form in places due to rock falls above the timbering. Such "towers" can have heights of up to 40 metres. These "faults" provide room for further sloughing rocks,
b) The drawn-off face, the so-called "old man" contains combustible material, such as supporting timber, coal dust and unmined organic material. These galleries must be sealed gas-tight. The "dams" provided for this purpose are about 2 - 3 metres wide and are as a rule formed up to just below the height of the seam, using hydraulically setting material. The remaining cavities must be sealed gas-tight.
c) Coal extraction nowadays often takes place at a depth of 1400 - 1500 metres. The overlying rock exerts a very high pressure on the galleries and driving. For this reason, the support is effected by means of flexible steel rails. The cavities located above are as a rule filled with rigid concrete.

Building materials for underground use are relatively expensive. The transport into the mine requires the use of relatively much energy and time and, in addition, the shaft installation is subjected to high loads. For this reason, foamed building material having a density of less than 1.0 g/cm³ is now used instead.

For this purpose, air pores are introduced into cement mortar or gypsum mortars using complex machinery. This machinery must as a rule be operated above ground, and the foamed material must be delivered underground in a pipeline. On the way, a large part of the mechanically produced pores is destroyed again.

It is also possible to generate foam by means of a likewise mechanically prepared protein material. In this case, air pores or protein pores are in general stabilised chemically.

In spite of all the chemical/technological outlay, only about 80% of the foam material produced above ground arrives at the placing site. For this reason, the desired foam material is now prepared on site in the gallery or at the face, but this entails a number of further problems. For example, equipment for underground use must be of simple construction and robust in handling. Furthermore, the delivery of liquids underground is possible only at relatively high cost or after approval by the mining authorities. For this reason, this possibility is at present also restricted to only a few products. The building material known under the brand name "Isoschaum" [Isofoam] is nowadays used predominantly for the application b).

For application c) a search is underway for a material which can initially absorb the resulting pressure by deformation but, after a certain deformation, by a progressive rise in compressive strength.

For various reasons, a number of chemical substances are not approved for use in mining. These include, for example:
- acids, since hydrogen is formed in contact with metals (explosion risk!);
   metallic support parts, machinery, equipment, supply lines and drainage lines corrode;
- substances which, after chemical reaction, can release combustible, fire-promoting or toxic gases;
- all liquid substances in major quantities, except water and perhaps waterglass which is used as an accelerator for gunned concrete.

Permissible substances would be:
- carbon dioxide-eliminating substances in the acid application range, foaming is primarily achieved in conjunction with mineral, hydraulically setting binders, but the stability of the foam body and its strength are inadequate.
- The combination of wetting-active, acid surfactants (for example dialkylnaphthalenesulphonic acid, alkylbenzenesulphonic acid, fatty alcohol-sulphonic acid) with CO₂-eliminating substances (for example CaCO₃) leads to latent foaming in mineral, hydraulically setting binder systems.
- Unstable foaming of hydraulic binders due to CO₂ elimination from ammonium dicarbonate when hot.

The above mentioned protein-based foams have a number of serious disadvantages:

The organic material must be disintegrated in a suitable device and mixed with the binder. Due to instability of the foam, a large part of the pores is destroyed. A part of the void volume is lost during transport to the placement site. The remaining foam bubbles must retain their shape until the binder has built up a supporting framework. The foaming factor is correspondingly low. A further disadvantage is the relatively high content of organic material in the binder matrix. Cements as binders react here extremely sensitively with regard to the solidification/hardening behavior, course of setting, evolution of strength and final strength. For this reason, the individual components must be mutually matched very accurately. This is achieved in general by means of an expensive and complicated set of machinery.

The use of "Isoschaum" is nowadays only possible on the basis of an approval given a long time ago, since formaldehyde-containing gases are formed during setting and toxic gases are formed in the case of fire. From being widespread use has now dropped to about one tenth of what it was before.

In DE-C2- 3,033,376, a process for backfilling cavities with flowable material, in particular for mining, is indicated, in which a mixture consisting of Portland cement, alumina cement, calcium aluminate, calcium sulphate, setting retardant and a setting accelerator is used. After addition of water, this mixture forms a flowable mass which fills cavities but does not foam up.

DE-A1- 4,009,967 describes a process for forming pores in mortar or for producing gas concrete on site, wherein a powder of a substance, which evolves gas by reaction with another mortar component, such as, for example, aluminum, silicon or calcium carbide, is mixed in. To suppress the formation of gas immediately after the mixing of the mortar, the gas-forming substance is provided with an inactivating surface layer, for example a layer of oil, fat, resin or wax. Because of the obligatory use of hydrogen peroxide or hydrofluoric acid, this process appears, however, hardly suitable for underground use, for the reasons explained above.

In DE-C1- 3,909,083, a production process for a gypsum building material having a porous structure is claimed, in which gypsum is foamed by the reaction of diphenylmethane 4,4-diisocyanate prepolymer with water. For the reasons given above, this building material mixture is likewise hardly suitable for underground use.

GB-A- 2,007,636 relates to a building material mixture for producing a solid silicate foam, which comprises an alkali metal silicate, zinc hexafluorosilicate and magnesium hexafluorosilicate and also an organic, surfactant-based foam former. In this case, a "prefoam" is generated by blowing air into the mixture of the hexafluorosilicates which has been dissolved in water and to which the surfactant has been added. Directly at the place of use, the aqueous silicate suspension is then mixed in, in order to produce a silicate foam having a gelling time of a few minutes. This process comprises exclusively mixtures for producing silicate foam structures which, in addition, have a very short processing time, so that these must in any case be transported separately to the place of use, which involves an expensive processing device on site.

JP published patent application 50-6631 describes a porous gypsum body of cellular structure, which is obtained by mixing burnt gypsum, calcium carbonate or magnesium carbonate, calcium hexafluorosilicate and also calcium stearate or magnesium stearate as bubble stabiliser and gloss agent with water for a few minutes. Due to the immediate foaming-up of this mixture after the addition of water, transport over a relatively long pumping distance is not possible in this case.

The present invention is based on the object of providing a building material mixture for foam mortars, which avoids the disadvantages, described above, of the mixtures according to the state of the art has the following advantages:
- The binder must be inexpensive, easily available and procurable in a sufficiently large quantity.
- The mixture should, as far as possible, be processable as a one-component system.
- Water is the only possible reaction partner.
- The binder must be mixable with the filler combinations usual in mining.
- The foaming must be effected by chemical reaction and not by mechanical disintegration.
- The reaction products must be non-toxic, non-combustible, non-corrosive and also chemically neutral.
- The stirred-up material must be pumpable over long distances by means of standardised appliances.
- After issuing from the spray head, the building material mixture must foam up as rapidly as possible.
- The adaptation of the foam body produces to the particular surface must not take place by means of mechanically generated pressure.
- The hardened foam body must be relatively pressure-resistent and/or be capable of progressively absorbing pressure.
- The foam yield must be greater than 10 m³ per 1000 kg of dry building material mixture.
- The setting time should be less than 10 minutes.
- The stability of the foam during the foaming and solidifying process must be guaranteed.

This object is achieved by the features of claim 1. Advantageous embodiments of the invention are the subject of the subclaims.

More specifically, the invention concerns a composition for producing foam mortar comprising a calcium sulphate component as a binder and a carbonate as a foamable material. The composition further comprises a pre-hydrophobised water soluble hexafluorosilicate, i.e. a salt of hexafluorosilicic acid. It is important that the hexafluorosilicate have been treated with a hydrophobic agent before it is mixed with the other component of the composition. The invention encompasses a dry, storage stable composition as well as a composition including water. The latter composition starts foaming some time after the addition of water.

The principle of the present invention is the use, as blowing agent, of a water-soluble hexafluorosilicate (masked acid) which, before mixing with the other components of the composition according to the invention, has been rendered hydrophobic by pretreatment with a water-repellent agent.

According to the invention, water-soluble hexafluorosilicates, preferably magnesium hexafluorosilicate, zinc hexafluorosilicate and/or ammonium hexafluorosilicate, are used for the reason that, after the degradation of the layer rendering them hydrophobic, they immediately dissolve in water and/or then rapidly undergo alkaline hydrolysis in the basic medium present. They can thus very rapidly develop their blowing action proper, after overcoming the hydrophobic coating - in contrast to a hexafluorosilicate sparingly soluble in water (for example calcium hexafluorosilicate). With particular preference, magnesium hexafluorosilicate is used.

The hydrophobic agents used are preferably silicone oils [poly(alkyl- or aryl-siloxanes)] and/or metal salts of higher alkanoic acids, preferably having 8 to 20 carbon atoms. Calcium, magnesium and/or aluminium hexadecanate (stearate) are particularly preferred.

The hydrophobic character effects, on the one hand, an extended storability of a dry composition according to the invention, since this prevents premature foaming-up thereof even in the presence of atmospheric moisture. On the other hand, it allows, after addition of water, a substantially longer pumping distance than in the case of an uninhibited hexafluorosilicate.

Both the storage stability and the maximum possible pumping distance can here be adjusted within wide limits by the added quantity of the hydrophobic agent, that is to say, by the layer thickness thereof on the hexafluorosilicate grain.

The deactivation of the hydrophobic agent after addition of water takes place by alkaline hydrolysis, whose rate can be controlled within certain limits by the pH of the composition stirred up with water, that is to say by the content of carbonate and other basic constituents therein.

After the degradation of the hydrophobic layer, the hexafluorosilicate likewise undergoes alkaline hydrolysis. The hydrofluoric acid liberated in the hydrolysis reacts with the carbonate, with the evolution of a gas (CO₂) which effects the foaming-up of the mortar. The resulting foam structure is then stabilised by the formation of the sparingly soluble calciumfluoride.

In comparison with the prior art, as expressed in DE-A1- 4,009,967, it is not primarily the gas evolving material that is coated with the hydrophobic agent. In contrast to the prior art, the initiator for the carbon dioxide formation, i.e. the hexafluorosilicate, is hydrophobised.

Compared to JP published patent application 50-6631, the present invention differs from the prior art in that the hexafluorosilicate and the salt of the fatty acid are not present as separate components in the composition. In contrast, the hexafluorosilicate is inhibited by pretreatment with a hydrophobic agent.

The carbonate components used are preferably calcium carbonate such as calcite, lime-sandstone, ground limestone or the like, and/or magnesium carbonate such as dolomite, magnesite or the like. A grain size of 0 - 8 mm has proved to be particularly suitable.

The carbonate component is added in a quantity at least sufficient for completely neutralising the hydrofluoric acid liberated in the hydrolysis of the hexafluorosilicate. Preferably, however, the carbonate is admixed in a greater molar excess, relative to the hexafluorosilicate.

In addition to the carbonate component, the foamable material used may comprise an aliphatic or an aromatic diisocynate which, under the action of acid, likewise liberates carbondioxide by the spontaneous decomposition of the carbamic acid formed as an intermediate. Diphenylmethane 4,4'-diisocyanate prepolymer is particularly preferred for this purpose.

The combination of a diisocyanate with a carbonate allows a certain flexibilisation of the foam body, wich is relatively rigid without added diisocyanate. With a higher proportion of diisocyanate, a product can ultimately be obtained which can readily be cut with a knife.

As binder and as the main component on terms of quantity, calcium sulphate is used, all commercially available types being suitable in principle, for example α-and/or β-calcium sulphate hemihydrate, processed gypsum from flue gas desulphurisation plants, natural gypsum, chemical gypsum, anhydrite, dihydrate or lenzine, in each case as the sole calcium sulphate component or as a mixture with one or more others, the hemihydrates being preferred.

Calcium sulphate is used because of its advantageous price and mainly for the reason that, as is known, it sets relatively quickly after stirring with water. In addition, the achievable compressive strengths after setting (analogously to DIN 1164 or DIN EN 196) can be regarded as sufficiently high, especially for use as backfill material. Furthermore, calcium sulphate has the advantage that it has a relatively high filling ratio with all commercially available fillers.

The composition according to the invention can also comprise hydraulic and/or latent hydraulic binders, all commercially available types being suitable in principle. Examples of suitable hydraulic binders are cements according to DIN 1164 or DIN EN 196, special cements (for example Fondu Lafarge, Heidelberger Schnellzement [Heidelberg rapid cement], etc.), mortar binders (optionally rendered hydrophobic) according to DIN 1060/4207 or granulated hydraulic blast-furnace slag. Examples of latent hydraulic binders which can be used are electrostatic precipitator ash fillers, ground trass, moler earths, microsilica or diatomaceous earths.

The composition according to the invention can also comprise inorganic and/or organic fillers, all usual types being suitable in principle. Among the inorganic fillers, the following are preferred: ground rock and silica, steel filings, wire fibres, expandable clay, perlites, superlites, vermiculites, granulated pumice, hollow glass beads (fillites), muscovite filler (sepiogel, pangel), barite (barium sulphate) or combustion ash. Preferred suitable organic fillers are fibres of cellulose, cotton, polyethylene, polypropylene and carbon, hollow microbeads based on polyethylene, polypropylene, polystyrene, and wood flour and cork flour.

The composition can in addition contain reaction retarders known per se, preferably alkanoic acids having from 4 to 10 carbon atoms and/or hydroxycarboxylic acids having from 4 to 10 carbon atoms and from 1 to 6 hydroxy groups, or metal salts thereof, preferably the alkali metal salts or ammonium salts. The sodium or potassium salts of citric acid, tartaric acid and malic acid are very particularly preferred.

Furthermore, the composition can comprise setting accelerators known per se, for example halides, sulphates, nitrates, nitrites, borates or hydroxides, preferably of the alkali metals.

Furthermore, the composition can contain an organic-based foam stabiliser known per se, preferably on a cellulose ether or ester base.

Moreover, an inorganic or organic thickener known per se can be mixed into the composition. Amongst the inorganic agents, hectorite and wollastonite, and, amongst the organic agents, methylcellulose derivatives, guar meal derivatives, starch meal derivatives, polyacrylamides and also formaldehyde/melamine condensation products (for example Melment F-10) are preferred.

In addition, dispersion powders or dispersions known per se can also be added to the composition, those based on a vinyl chloride/vinyl acetate copolymer or (meth)acrylate copolymer (examples of commercial products are Vinnapas, Mowilith, Elotex and Acronals being preferred.

The composition can also contain barium sulfate which makes it suitable for producing material for radiation protection purposes.

The constituents, listed above, of the composition according to the invention can be varied in wide limits-depending on the intended application. However, the following ranges, in % by weight of the dry material, are to be regarded as preferred:

| % by weigh | Component |
|---|---|
| 40 - 90 | Calcium sulphate - binder |
| 1 - 10 | Hexafluorosilicate |
| 0.1 - 5 | Hydrophobic agent |
| 2 - 30 | Foamable material (carbonate, diisocyanate) |
| 0 - 20 | Hydraulic binder |
| 0 - 20 | Latent hydraulic binder |
| 0 - 30 | Filler |
| 0 - 5 | Reaction retarder |
| 0 - 5 | Setting accelerator |
| 0 - 3 | Foam stabiliser |
| 0 - 3 | Thickener |
| 0 - 10 | Dispersion powder or |
| 0 - 20 | Dispersion |

The following can be regarded as a particularly preferred composition, in particular for backfill material:

| % by weight | Component |
|---|---|
| 70 - 90 | Calcium sulphate |
| 1 - 5 | Hexafluorosilicate |
| 0.1 - 0.5 | Stearate |
| 5 - 25 | Calcium carbonate and/or magnesium carbonate |
| 1 - 10 | Latent hydraulic binder |
| 0.5 - 1 | Foam stabiliser |
| 0.5 - 1 | Thickener |

The calcium sulphate binder/blowing components (hexafluorosilicat and foamable material) mass ratio is preferably in the range 4:1 to 100:1 depending on the desired foaming factor. This quotient significantly affects the evolution of strength and/or the achievable final strength of the building components produced from the foam mortar according to the invention.

The quantity of make-up water can be selected within wide limits but is preferably between 30 and 50% by weight, relative to the total mass of the particular composition employed.

The invention also concerns a method of producing foam mortar, the method comprising the steps of mixing a calcium sulphate component as a binder, a carbonate as a foamable material, a pre-hydrophobised water soluble hexafluorosilicate and water, and transferring the mixture into a mould or formbrick within the pot life. The invention further concerns a method of backfilling cavities with foam mortar, particularly in mining and tunneling, the method comprising the steps of mixing the components as mentioned above, and transferring the mixture to the cavity within the pot life.

The stirring and setting temperature can be within a wide range, the pot life of the foam mortar shortening correspondingly at a higher temperature. The foam mortar according to the invention is therefore preferably processed in the temperature range between about +5 and about +35°C.

For building components, for which higher mechanical strength is required, a hydraulic binder and/or a filler based on relatively long inorganic or organic fibres should preferably be mixed in.

Mixing with barium sulphate allows building components to be produced which are suitable for radiation protection purposes, for example in X-ray rooms.

Further details regarding preferred embodiments appear in the above description of the composition.

The foam mortar according to the invention has, after setting, a relatively low density in the range between about 0.1 and 1.5 g/cm³. This density can be even further reduced by the addition of hollow glass beads, whose closed-cell structure ensured a permanently low density even under continuous exposure to water.

A preferred backfill material according to the invention can be prepared according to the following formulation:

| % by weight | | Component |
|---|---|---|
| a) | 70 - 90 | Calcium sulphate |
| b) | 1 - 5 | Magnesium hexafluorosilicate inhibited with: |
| c) | 0.1 - 0.5 | Aluminium stearate |
| d) | 5 - 25 | Calcium carbonate and/or magnesium carbonate |
| e) | 0.5 - 1 | Methylcellulose |
| f) | 0.5 - 1 | Melment F-10 (sulphonated condensation product of melamine and formaldehyde) |
| g) | 0.05 - 5 | Sodium citrate |
| h) | 30 - 50 | Water |

In the case of particulary long pumping distances, and to obtain variable degrees of foaming-up, it is an advantage if the components a - c) and d - g) are each stirred separately with water and then pumped separately, so that they are only combined directly at the place of use.

The following measured results can be obtained on foam mortars prepared from the above formulation:
pH: 6.8 - 8.0
Gelling time: 1 - 20 minutes
Start of solidification: 10 - 60 minutes
Foaming volume: 7 - 50% by volume
Apparent density: 0.5 - 1.5 g/cm³
Compressive strength: 0.5 - 2.8 MPa (after 1 hour)
Tensile strength on bending: 0.2 - 0.9 MPa (after 28 days)
After the foam mortar has set, it does not show any loss in strength worth mentioning even after prolonged storage (28 days) in mine water having a very high salt content.

An insulating or fire protection material can be prepared according to the same formulation as the backfill material (components a - d and h obligatory, e - g optional), and in addition: 5 - 25 % by weight of granulated hydraulic blast furnace slag having a CaO content of about 45%.

A radiation protection material can be prepared according to the same formulation as the backfill material (components a - d and h obligatory, e - g optional), and in addition: 5 - 30 % by weight of barium sulphate (barite).

The composition according to the invention is characterised in that the main constituent in terms of quantity, namely the calcium sulphate binder, represents a very inexpensive raw material, above all because of the steadily increasing quantity arising in flue gas desulphurisation plants.

Moreover, the formulation of the composition according to the invention can be selected exclusively on an inorganic basis (with the exception of the negligibly small proportion of hydrophobic agent), which allows a non-hazardous and environmentally sound application, especially in closed spaces.

This is of particular importance, especially also for applications as an underground backfill material or in tunnelling and cavern construction. A further advantage of the foam mortar according to the invention fully manifests itself here, namely its pot life, which is adjustable by the degree of inhibition of the hexafluorosilicate blowing agent, before foaming up, which correspondingly allows long pumping distances. Moreover, the foaming height or the density of the foam mortar after setting can be adjusted within certain limits by the quantity of water added to the compositions according to the invention, which is a novel feature in the backfilling of underground cavities. In addition, the setting rate of the foam mortar can be adapted to the particular requirements on site by adding a setting retarder or accelerator at the end of the hose. Moreover, the foam mortar according to the invention can already be exposed to a pressure stress a few minutes after setting. The high water resistance of the foam mortar after setting, which is comparable to that of dispersion adhesives for ceramic tiles according to DIN 18156, Part III, is also very advantageous for underground use.

Moreover, the foam mortar according to the invention is outstandingly suitable for sound insulation, heat insulation and as a fireproofing material and cable-shielding material. Since the foam mortar is produced in situ, it has particular advantages in the renovation of existing buildings, for example in the retrofilling of so-called false floors or in filling double walls of light-weight building panels, in which case the filling orifices can be kept relatively small.

Solid gypsum bricks are nowadays widely used in interior finishing, since the production of gypsum foam bricks by the conventional methods (foaming in an autoclave at elevated temperature under pressure or by means of relatively expensive blowing components, for example aluminium powder, hydrogen peroxide and the like) is relatively complicated and expensive. In this case, the foam mortar according to the invention can make the manufacture of foamed gypsum bricks markedly cheaper.

The invention is explained in more detail below by reference to a few examples. The comparative example 1 2 demonstrates that use of hexafluorosilicate without inhibition results in immediate foaming-up of the composition after addition of water.

Example 1: 2700 g of calcium sulphate hemihydrate are initially introduced with 900 g of water. 160 g of electrostatic precipitator ash filler, 240 g of ground limestone and 65 g of magnesium hexafluorosilicate are mixed and made into a paste with 750 g of water. The two initial products are then intensively mixed with one another. Vigorous foaming already starts during the stirring procedure and is already complete after 60 seconds.

Example 2 (the invention): The same quantities of substances as in Example 1 are used; as distinct from this, however, the magnesium hexafluorosilicate is inhibited with 5 g of aluminium stearate before all the other components of the composition are premixed in the dry state. After stirring up with water, the suspension retains its original volume for about 10 minutes and suddenly starts to foam only after the hydrophobic inhibition of the blowing agent has been overcome. After a further 3 minutes, the foam has hardened to such an extent that it no longer collapses.

## Claims

1. Composition for producing foam mortar, comprising a calcium sulphate component as a binder and a carbonate as a foamable material, **characterised** in that it further comprises a pre-hydrophobised water soluble hexafluorosilicate.

2. Composition according to claim 1, **characterised** in that the hexafluorosilicate comprises one or more of magnesium hexafluorosilicate, zinc hexafluorosilicate and ammonium hexafluorosilicate.

3. Composition according to claim 1 or 2, **characterised** in that the hexafluorosilicate is pre-hydrophobised with one or more of silicone oil and metal salts of alkanoic acids having from 8 to 20 carbon atoms.

4. Composition according to anyone of the claims 1-3, **characterised** in that the carbonate comprises one or more of calcium carbonate and magnesium carbonate.

5. Composition according to anyone of the claims 1-4, **characterised** in that it comprises an aliphatic or an aromatic diisocyanate.

6. Composition according to anyone of the claims 1-5, **characterised** in that it comprises a hydraulic or a latent hydraulic binder.

7. Composition according to anyone of the claims 1-6, **characterised** in that it comprises a setting retarder selected from alkanoic acids having from 4 to 10 carbon atoms, hydroxyalkanoic acids having from 4 to 10 carbon atoms and from 1 to 6 hydroxy groups, or metal salts thereof.

8. Composition according to anyone of the claims 1-7, **characterised** in that it comprises a foam stabiliser selected from cellulose ethers or cellulose esters.

9. Composition according to anyone of the claims 1-8, **characterised** in that it comprises an inorganic or an organic thickener.

10. Composition according to anyone of the claims 1-9, **characterised** in that it comprises barium sulphate.

11. A method of producing foam mortar, **characterised** in that the method comprises the steps of mixing a calcium sulphate component as a binder, a carbonate as a foamable material, a pre-hydrophobised water soluble hexafluorosilicate and water, and transferring the mixture into a mould or formbrick within the pot life.

12. A method of backfilling cavities with foam mortar, **characterised** in that the method comprises the steps of mixing a calcium sulphate component as a binder, a carbonate as a foamable material, a pre-hydrophobised water soluble hexafluorosilicate and water, and transferring the mixture into the cavity within the pot life.
